Europäisches Patentamt

(19) European Patent Office

Office européen des brevets

(11) Publication number: **0 012 488**
**B1**

(12) **EUROPEAN PATENT SPECIFICATION**

(45) Date of publication of patent specification: **25.05.83**

(51) Int. Cl.³: **C 01 F 11/46, C 04 B 11/02**

(21) Application number: **79200755.1**

(22) Date of filing: **12.12.79**

(54) **Process for the preparation of calcium sulphate hemihydrate and calcium sulphate hemihydrate obtained by this process.**

(30) Priority: **13.12.78 NL 7812108**

(43) Date of publication of application:
**25.06.80 Bulletin 80/13**

(45) Publication of the grant of the patent:
**25.05.83 Bulletin 83/21**

(84) Designated Contracting States:
**AT BE DE FR GB IT NL SE**

(56) References cited:
**DE - A - 1 571 507**
**GB - A - 1 184 585**
**GB - A - 1 248 037**

**CHEMICAL ABSTRACTS, vol. 80, 1974, page 273, no. 18835n**
**Columbus, Ohio, U.S.A.**

(73) Proprietor: **STAMICARBON B.V.**
**Postbus 10**
**NL-6160 MC Geleen (NL)**

(72) Inventor: **Weterings, Cornelis Antonius Maria**
**Schineksstraat 18**
**NL-6171 AN Stein (NL)**
Inventor: **Janssen, Johannes Anna**
**Kloosterlaan 36**
**NL-6451 ER Schinveld (NL)**

(74) Representative: **Roeffen, Wilhelmus Johannes Maria et al,**
**OCTROOIBUREAU DSM Postbus 9**
**NL-6160 MA Geleen (NL)**

Courier Press, Leamington Spa, England.

Process for the preparation of calcium sulphate hemihydrate and
calcium sulphate hemihydrate obtained by this process.

The invention relates to a process for the preparation of calcium sulphate hemihydrate from calcium sulphate dihydrate and sulphuric acid.

A process of this type is known from British patent specification 1,101,771. In the process according to said patent specification calcium sulphate dihydrate is converted into calcium sulphate hemidrate with the aid of a boiling, diluted sulphuric acid solution. A disadvantage of this process is that the mixture of gypsum and diluted sulphuric acid is to be heated to its boiling point. Furthermore, it appears to be necessary to add a quantity of previously prepared seeding material to this mixture in order to have the conversion proceed at a sufficient rate. The sulphuric acid required for the recrystallization is to be strongly diluted, as otherwise a conversion into calcium sulphate anhydrite will occur. This diluted sulphuric acid, which is diluted ever further by the crystal water from the calcium sulphate dihydrate, can be used a number of times by concentrating it, but must then be replaced by fresh acid. The diluted waste acid has virtually no technical applications.

The aim of the present invention is to provide a process that does not have the disadvantages of the known process.

According to the invention this is accomplished by performing the recrystallization of the calcium sulphate dihydrate in an environment with an $H_2SO_4$ concentration of 40—60 wt % at a temperature of 40—80°C and in the presence of at least one tetravalent metallic compound thereby applying a higher temperature within the defined range if the $H_2SO_4$-concentration is relatively low and applying a higher $H_2SO_4$-concentration within the defined range if the temperature is relatively low. By application of this process it appears to be possible to have the recrystallization of the calcium sulphate dihydrate into calcium sulphate hemihydrate proceeds practically quantatively, without having to heat the mixture to its boiling point, while it is not necessary to add seeding crystals, either. Furthermore, the rather concentrated recrystallization acid is suitable for other industrial purposes.

The tetravalent metallic compounds that can be applied include tetravalent tin, lead and/or zirconium compounds, for instance salts, such as nitrate, chloride, fluoride, sulphate, or a compound that reacts in situ with sulphuric acid to form sulphate.

The quantity of metallic compound can vary within broad limits, e.g. from 0.01 to 1 wt. % calculated as metal in relation to the entire recrystallization mixture. A larger quantity of metallic compound can be applied without objections, but this has no additional advantages. By preference a quantity of 0.02—0.2 wt. %, calculated as metal in relation to the entire mixture, is applied.

The metallic compound can be added in solid, liquid or dissolved form. The metallic compound can be added to the calcium sulphate dihydrate to be recrystallized, or to the sulphuric acid, or to the recrystallization mixture.

The recrystallization temperature may vary in the range of 40 to 80°C, depending on the acid concentration. At a temperature below 40°C the recrystallization proceeds very slowly, while at a temperature above 80°C the formation of calcium sulphate anhydrite increases. Preferably a temperature between 50 and 70°C is chosen.

The $H_2SO_4$ concentration may vary within the appointed range, depending on the recrystallization temperature chosen. The $H_2SO_4$ concentration is here understood to mean the weight percentage of $H_2SO_4$ in the liquid phase of the recrystallization mixture. This is not only determined by the concentration of the acid supplied, but also by the weight ratio between supplied acid and calcium sulphate dihydrate to be recrystallized. By preference highly concentrated sulphuric acid, e.g. 96 wt. %, is led into the recrystallization zone, and the concentration of $H_2SO_4$ in the recrystallization mixture is given the desired value by varying the weight ratio between supplied sulphuric acid and calcium sulphate dihydrate to be recrystallized. The $H_2SO_4$ concentration in the mixture is preferably chosen to be 45—55 wt. %. In principle, a $H_2SO_4$ concentration between 25 and 40 wt. % can be applied, but then, if the above-mentioned temperature area of 50—70°C is used, within reasonable time no recrystallization is observed, which is not the case at higher temperature. When using $H_2SO_4$ concentrations above 60 wt. % the formation of calcium sulphate anhydrite strongly increases.

The calcium sulphate hemihydrate formed in the recrystallization can in various ways be separated from the recrystallization liquid, e.g. by centrifuging or filtering. If the indicated preferred area is used, the product has the attractive, hexagonal structure of $\alpha$-hemihydrate, an average diameter of 4—7 $\mu$, a length/diameter ratio of 10—1:1 and a bulk density of up to 1400 g/l, which makes it particularly suitable as raw material for the production of building elements.

The remaining diluted crystallization acid can be applied for various purposes, e.g. for the preparation of ammonium sulphate, for the preparation of ammonium sulphate nitrate, for the digestion of rock phosphate, etc.

As calcium sulphate dihydrate, natural gypsum or a dihydrate formed as by-product in chemical processes can be applied. By preference calcium sulphate dihydrate that is formed as by-product in the preparation of phosphoric acid on the basis of rock phosphate and sulphuric acid is used.

This calcium sulphate dihydrate, also known as 'phosphogypsum', can as such not be applied as binding agent in the manufacture of building elements as it is already fully hydrated. Furthermore, it contains various impurities e.g. metallic salts, fluorine compounds, silicon compounds, which, after dehydrating in known way, make it unsuitable for industrial application, e.g. in the building or the paper industries. In recrystallizing such a phospho-gypsum into calcium sulphate hemihydrate according to the invention these impurities are transferred to the recrystallization acid, and a very pure calcium sulphate hemihydrate is obtained.

The resulting recrystallization acid is very suitable for digesting rock phosphate. In that case fresh technical sulphuric acid (96%) can first be used for the recrystallization. In doing so it is diluted by the absorption of crystal water from the phospho-gypsum to the concentration required for digestion (70%), so that a separate dilution step is superfluous.

The invention will be further elucidated in the following examples.

### Example 1

In a glass 0.3 l reaction vessel, provided with a stirrer, calcium sulphate dihydrate was introduced that had been obtained in the preparation of phosphoric acid by digesting rock phosphate with sulphuric acid. Subsequently concentrated 96 wt. % sulphuric acid, to which zirconium (IV) nitrate had been added in a quantity of 0.05 wt. % of zirconium, calculated in relation to the entire recrystallization mixture, was introduced. The ratio between the quantities of calcium sulphate dihydrate and sulphuric acid was chosen so that the $H_2SO_4$ concentration in the liquid phase of the recrystallization mixture was 46 wt. %. The temperature in the reaction vessel was maintained at 60°C. The mixture was stirred in the reaction vessel for 30 minutes. Subsequently the resulting paste was filtered. The filter cake was washed out with hot water and with acetone and was then dried at 40°C.

X-ray diffraction proved that the solid product consisted for 100% of calciumsulphate hemihydrate. The product had the form of bars with an average diameter of 6 $\mu$ and an average length of 15 $\mu$. The bulk density was approximately 1200 g/l.

### Example 2

In the same way as in example 1 calcium sulphate dihydrate was recrystallized with sulphuric acid to which tin (IV) chloride had been added. The quantity of tin chloride, calculated as tin in relation to the recrystallization mixture was 0.05 wt. %

X-ray diffraction proved that the solid product consisted for 100% of calcium sulphate hemihydrate in the form of bars with an average diameter of 3—4 $\mu$, an average length of 25 $\mu$, and a bulk density of 900 g/l.

### Examples 3—7

In the same way as in example 1 calcium sulphate dihydrate was recrystallized with sulphuric acid at varying values for temperature, acid concentration and metal addition. Example 7 is a comparative test without metal addition. The results are summarized in the following table.

| Example | $H_2SO_4$ conc. in wt. % of $H_2SO_4$ in rel. to mixture | Temperature in °C | Metal addition in wt. % in rel. to recrystallization mixture | Product |
|---------|------|------|------|------|
| 1 | 46 | 60 | 0.05 Zr nitrate | 100% hemihydrate |
| 2 | 46 | 60 | 0.05 Sn chloride | 100% hemihydrate |
| 3 | 40 | 70 | 0.03 Zr nitrate | 100% hemihydrate |
| 4 | 50 | 50 | 0.10 Zr nitrate | 100% hemihydrate |
| 5 | 50 | 50 | 0.05 Zr nitrate | 100% hemihydrate |
| 6 | 46 | 60 | 0.10 Sn chloride | 100% hemihydrate |
| 7 | 45 | 60 | — | 10% dihydrate 15% hemihydrate 75% anhydrite |

## Claims

1. Process for the preparation of calcium sulphate hemihydrate in which calcium sulphate dihydrate is converted with the aid of sulphuric acid, characterized in that the conversion is carried out in an environment with an $H_2SO_4$ concentration of 40—60 wt. %

at a temperature of 40—80°C and in the presence of at least one tetravalent metallic compound thereby applying a higher temperature within the defined range if the $H_2SO_4$ concentration is relatively low and applying a higher $H_2SO_4$-concentration within the defined range if the temperature is relatively low.

2. Process according to claim 1, characterized in that as tetravalent metallic compound a tetravalent tin, zirconium and/or lead compound is used.

3. Process according to claim 1 or 2, characterized in that as tetravalent metallic compound a salt or a compound that reacts in situ with sulphuric acid to form sulphate is used.

4. Process according to any of the claims 1—3, characterized in that the quantity of the tetravalent metallic compound, calculated as metal in relation to the entire recrystallization mixture, is 0.01—1 wt. %.

5. Process according to any of the claims 1—4, characterized in that the quantity of tetravalent metallic compound, calculated as metal in relation to the entire recrystallization mixture, is 0.02—0.2 wt. %.

6. Process according to any of the claims 1—5, characterized in that the conversion is carried out at a temperature of 50—70°C.

7. Process according to any of the claims 1—6, characterized in that the conversion is carried out at an $H_2SO_4$ concentration of the recrystallization mixture of 45—55 wt. %.

8. Process according to any of the claims 1—7, characterized in that calcium sulphate dihydrate obtained in the preparation of phosphoric acid starting from phosphate ore and sulphuric acid is used.

9. Process according to claim 8, characterized in that the calcium sulphate hemihydrate is separated from the mixture obtained in the recrystallization and the remaining diluted sulphuric acid is used for the digestion of phosphate ore.

10. Calcium sulphate hemihydrate prepared by the process according to any of the foregoing claims.

## Patentansprüche

1. Verfahren zur Herstellung von Calciumsulfat-hemihydrat, bei dem Calciumsulfat-dihydrat mit Hilfe von Schwefelsäure umgewandelt wird, dadurch gekennzeichnet, daß man die Rekristallisation des Calciumsulfatdi-hydrats in einer Umgebung mit einer $H_2SO_4$-Konzentration von 40—60 Gew.-% bei einer Temperatur von 40—80°C und in Gegenwart von mindestens einer vierwertigen Metallverbindung durchführt, wobei man eine höhere Temperatur innerhalb des angegebenen Bereiches anwendet, wenn die $H_2SO_4$-Konzentration verhältnismäßig niedrig ist, und eine höhere $H_2SO_4$-Konzentration innerhalb des angegebenen Bereiches anwendet, wenn die Temperatur verhältnismäßig niedrig ist.

2. Verfahren nach Anspruch 1, dadurch gekennzeichnet, daß als vierwertige Metallverbindung eine vierwertige Zinn-, Zirkon- und/oder Bleiverbindung verwendet wird.

3. Verfahren nach Anspruch 1 oder 2, dadurch gekennzeichnet, daß als vierwertige Metallverbindung ein Salz oder eine Verbindung, die in situ mit Schwefelsäure unter Bildung von Sulfat reagiert, verwendet wird.

4. Verfahren nach einem der Ansprüche 1 bis 3, dadurch gekennzeichnet, daß die Menge der vierwertigen Metallverbindung, berechnet als Metall und bezogen auf das gesamte Rekristallisationsgemisch, 0,01 bis 1 Gew.-% beträgt.

5. Verfahren nach einem der Ansprüche 1 bis 4, dadurch gekennzeichnet, daß die Menge der vierwertigen Metallverbindung, berechnet als Metall und bezogen auf das gesamte Rekristallisationsgemisch, 0,02 bis 0,2 Gew.-% beträgt.

6. Verfahren nach einem der Ansprüche 1 bis 5, dadurch gekennzeichnet, daß die Umwandlung bei einer Temperatur von 50 bis 70°C durchgeführt wird.

7. Verfahren nach einem der Ansprüche 1 bis 6, dadurch gekennzeichnet, daß die Umwandlung bei einer $H_2SO_4$-Konzentration im Gemisch von 45 bis 55 Gew.-% durchgeführt wird.

8. Verfahren nach einem der Ansprüche 1 bis 7, dadurch gekennzeichnet, daß ein bei der Herstellung von Phosphorsäure ausgehend von Phosphaterz und Schwefelsäure erhaltenes Calciumsulfat-dihydrat eingesetzt wird.

9. Verfahren nach Anspruch 8, dadurch gekennzeichnet, daß das Calciumsulfat-hemihydrat aus dem bei der Rekristallisation erhaltenen Gemisch abgetrennt und die zurückbleibende verdünnte Schwefelsäure für den Aufschluß von Phosphaterz verwendet wird.

10. Calciumsulfat-hemihydrat, hergestellt nach dem Verfahren gemäß einem der vorhergehenden Ansprüche.

## Revendications

1. Procédé pour la préparation d'hémihydrate de sulfate de calcium dans lequel on transforme du dihydrate de sulfate de calcium à l'aide d'acide sulfurique, caractérisé en ce que la transformation est conduite dans un environnement présentant une concentration d'$H_2SO_4$ de 40 à 60% en poids à une température de 40—80°C et en présence d'au moins un composé métallique tétravalent, appliquant ainsi une température supérieure dans l'intervalle défini si la concentration d'$H_2SO_4$ est relativement faible, et appliquant une concentration supérieure d'$H_2SO_4$ dans l'intervalle défini si la température est relativement basse.

2. Procédé selon la revendication 1, caractérisé en ce qu'on utilise comme composé métallique tétravalent un composé tétravalent d'étain, de zirconium et/ou de plomb.

3. Procédé selon l'une des revendications 1 ou 2, caractérisé en ce qu'on utilise comme composé métallique tétravalent un sel ou un composé qui réagit in situ avec de l'acide sulfurique pour former un sulfate.

4. Procédé selon l'une quelconque des revendications 1—3, caractérisé en ce que la quantité de composé métallique tétravalent, calculée sous forme de métal par rapport au mélange de recristallisation en entier, est de 0,01—1% en poids.

5. Procédé selon l'une quelconque des revendications 1—4, caractérisé en ce que la quantité de composé métallique tétravalent, calculée sous forme de métal para rapport au mélange de recristallisation en entier, est de 0,02—0,2% en poids.

6. Procédé selon l'une quelconque des revendications 1—5, caractérisé en ce que la transformation est conduite à une température de 50—70°C.

7. Procédé selon l'une quelconque des revendications 1—6, caractérisé en ce que la transformation est conduite à une concentration d'$H_2SO_4$ du mélange de recristallisation de 45—55% en poids.

8. Procédé selon l'une quelconque des revendications 1—7, caractérisé en ce qu'on utilise du dihydrate de sulfate de calcium obtenu dans la préparation de l'acide phosphorique en partant de minerai de phosphate et d'acide sulfurique.

9. Procédé selon la revendication 8, caractérisé en ce qu'on sépare l'hémihydrate de sulfate de calcium du mélange obtenu dans la recristallisation et en ce qu'on utilise l'acide sulfurique dilué restant pour la digestion du minerai de phosphate.

10. Hémihydrate de sulfate de calcium préparé par le procédé selon l'une quelconque des revendications précédentes.